Europäisches Patentamt

European Patent Office

Office européen des brevets

(11) Publication number: **0 487 146 A2**

# EUROPEAN PATENT APPLICATION

(21) Application number: **91202972.5**

(22) Date of filing: **14.11.91**

(51) Int. Cl.5: **A01D 34/76**, F16H 7/06, F16G 13/04

(30) Priority: **20.11.90 NL 9002535**

(43) Date of publication of application:
**27.05.92 Bulletin 92/22**

(84) Designated Contracting States:
**DE DK ES FR GB NL**

(71) Applicant: **Multinorm B.V.**
**Hoofdweg 1278 P.O. Box 1000**
**NL-2150 BA Nieuw-Vennep(NL)**

(72) Inventor: **Vissers, Hermanus Hendrik**

Herenweg 59
NL-2465 AB Rijnsaterwoude(NL)
Inventor: **Heemskerk, Johannes Wilhelmus**
**Cornelis**
Ruige Hoek 18
NL-2154 MK Burgerveen(NL)

(74) Representative: **Hoorweg, Petrus Nicolaas et**
**al**
**OCTROOIBUREAU ARNOLD & SIEDSMA**
**Sweelinckplein 1**
**NL-2517 GK The Hague(NL)**

(54) **A mowing device comprising a chain transmission.**

(57) A device for mowing crops such as grass, comprising a frame for displacing over the field, a housing-like support bar carried by the frame, extending transversely of the direction of movement and having at least two rotatably driven mowing elements which are distributed over the length of the support bar, and a transmission located in the bar for causing each mowing element to rotate, wherein the transmission is formed by an endless chain, preferably embodied as a toothed plate chain, trained alternately around the one and then the other side respectively of a chain wheel associated with each mowing element, so obtaining a large mowing power with a comparatively small noise level and no slipping.

FIG.1

The invention relates to a device for mowing crops such as grass, comprising a frame for displacing over the field, a housing-like support bar carried by the frame, extending transversely of the direction of movement and having at least two rotatably driven mowing elements which are distributed over the length of the support bar, and a transmission located in the bar for causing each mowing element to rotate.

It is customary in current practice to embody the transmission as a tooth wheel transmission wherein a number of tooth wheels are mounted in the housing-like support bar such that the mowing elements are disposed adjacently in opposing rotation. A determined width of the crop is mowed herewith, wherein the cutting members of the mowing elements moving towards each other cut through the crop and carry it onto a swath to the rear. The mowing elements can here be drums, discs and the like. The advantage of the tooth wheel transmission is that the cutting elements of the adjacently situated mowing elements can have an overlapping path of movement because no slipping is possible between the mowing elements. The drawback to such a tooth wheel transmission however is the maintenance, repair, disassembly and assembly thereof, the comparatively high noise level, the great weight and cost.

It is also known to use ropes or geared belts for the transmission, which however have the drawback that a relatively small power can be transferred, which restricts the mowing power of the device. Furthermore, there is the danger of slipping here.

The invention has for its object to obviate the above stated drawbacks and to provide a mowing device with which, in addition to a simple construction, a large mowing power can be obtained with a comparatively small noise level and no slipping.

The device of the invention is distinguished in that the transmission is formed by an endless chain which is trained alternately around the one and then the other side respectively of a chain wheel associated with each mowing element.

Such a construction is simple to embody because the number of wheels can remain limited. Placing round of the chain can moreover take place in random manner, whereby the rotational direction of the mowing discs can be selected as desired subject to the desired discharge pattern (swath) of the mown grass.

In one embodiment a guide wheel for the chain is arranged close to each chain wheel in order to enlarge the engaging angle of the chain wheel, whereby a high power can be transmitted.

In a simple embodiment each chain wheel is fixed onto the associated rotational shaft of the mowing element, wherein the centre line of each shaft is situated, as seen in the transporting direction, in front of the central longitudinal plane of the bar. This has the advantage of ensuring a free overlapping mowing range for the mowing elements on the leading side of the mower bar and an easy discharge of the crop to the rear if use is made of dish-like mowing elements.

The use of a chain transmission ensures the synchronous driving of each mowing element, wherein the unavoidable wear and stretch can be taken up by a tensioning wheel arranged displaceably in the lengthwise direction of the support bar.

In the preferred embodiment the chain is embodied as a toothed plate chain which, with the associated chain tooth wheels, ensures a low level of noise.

Using such a chain a low construction height can also be achieved, which is particularly manifested when the chain according to the invention has a height equal to the thickness of each chain wheel. A low construction height results in a low mowing height. With such a construction the advantage of a high transmission power is preserved. A high rotation speed is also achieved without high levels of noise.

A simple guiding is ensured by providing a part of the housing situated behind the rotation shafts with a guiding for the chain, which preferably consists of a slide layer of plastic, for instance teflon.

Above mentioned and other features of the invention will be further elucidated in the figure description herein-below of an embodiment.

In the drawing:

Fig. 1 shows a perspective front view of a disc mower, wherein the discs are carried by an underlying housing-like mower bar,

fig. 2a and b show in each case a top view of the disc mower of fig. 1 with a path of the chain transmission shown therein in two embodiments,

fig. 3 is a cross section along the line III-III in fig. 1, although as according to an alternative embodiment,

fig. 4 is a perspective view along arrow IV in fig. 2 of a detail of the chain transmission.

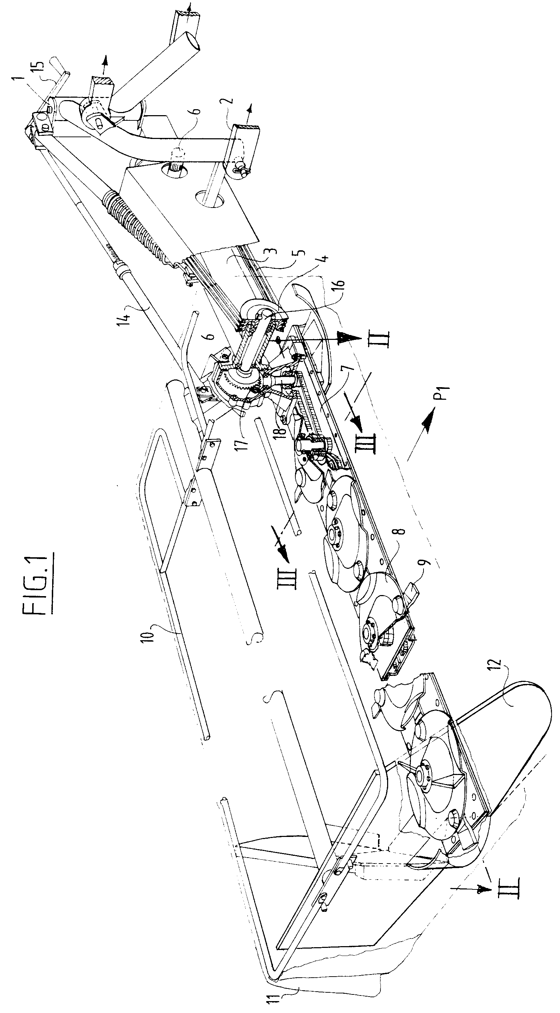

The device of fig. 1 comprises a frame 1, provided here with three connecting points for the three point suspension 2 of an agricultural tractor or the like (not shown). The frame has a support bar 3 on the free end of which is arranged a transmission 4 which can be set into rotation by a rope drive 5 when the drive shaft 6 of the rope drive is coupled to the power take-off of the agricultural tractor.

The transmission 4 is accommodated in a housing 6 rotatable relative to the support bar 3 and on the underside of which is arranged a housing-like support bar 7. Arranged on top of the support bar 7 are rotatably mounted dishes 8 which are provided on the periphery with cutting members 9 located in each case diametrically opposite each other. The dishes 8 with cutting members 9 form a mowing element in each case and are distributed over the bar 7 such that the cutting members 9 have overlapping mowing ranges.

It is noted for the sake of completeness that above the support bar 7 a framework 10 is arranged which serves to support a flexible cover 11. The framework 10 also supports a standing side plate 12 and a crop guide plate 13. The operation and purpose of these elements are assumed known and not further elucidated.

It is further noted that the housing 6 is coupled on the top to a telescopic top link 14 the other end whereof is coupled to the frame 1. By means of a handle 15 the length of the top rod 14 can be changed and therefore the angular position of the housing 6 with the support bar 7 arranged thereunder. This construction is also assumed known and not further elucidated.

Finally, it is noted that the rope transmission 5 leads to a rope pulley which is fixed on a horizontal intermediate shaft 16 which is connected on the other side to a right angle transmission 17. This latter continues as a vertical intermediate shaft 18 which serves to drive the transmission in the support bar 7.

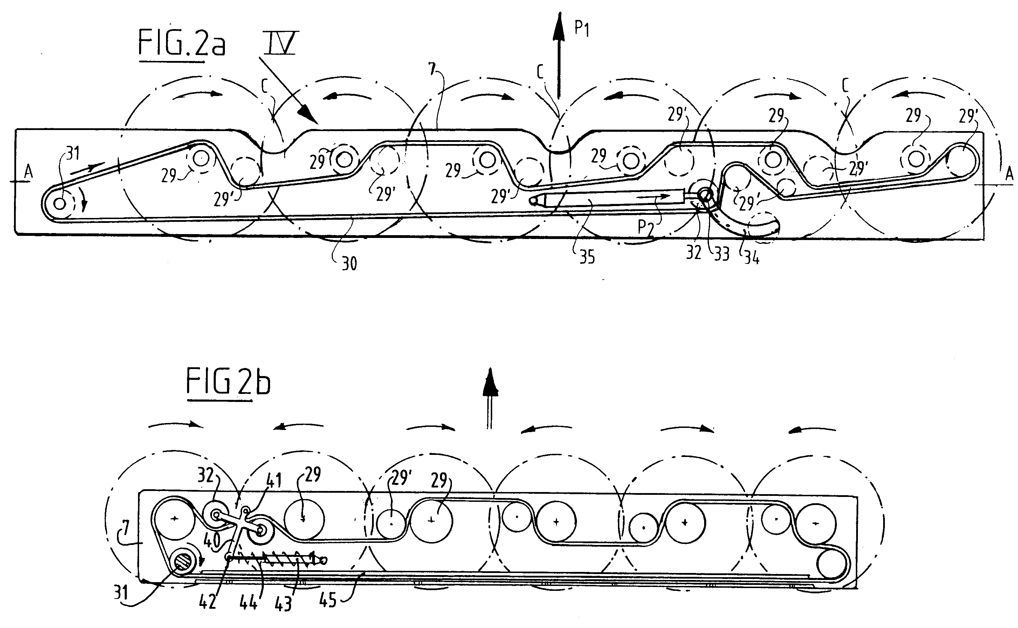

With reference to fig. 2-4 the transmission according to the invention in the support bar 7 is now further elucidated.

The support bar 7 consists of a tray-like bottom plate 20 having along the longitudinal edge thereof outwardly protruding flanges 21 and 22 respectively on the forward and rear sides thereof. The support bar 7 also has a top plate 23 which is fixedly screwed to the flanges 21, 22 by means of bolts 24. The top plate 23 supports bearing housings 25 at regular mutual intervals in which are accommodated a roller bearing 26 and a roller bearing 27 arranged thereabove. These bearings support a rotation shaft 28 which is provided on the bottom with a chain wheel 29 and which is fixed at the top to the dish 8 of the mowing element. The chain wheel 29 co-acts with a chain 30 arranged in the space between the top plate 23 and the tray-like bottom plate 20. The path of the chain 30 can be seen in fig. 2a, wherein it is noted that the driven chain wheel 31 is fixed to the underside of the vertically standing intermediate shaft 18 of transmission 6. The chain 30 runs alternately along opposing sides of the chain wheels 29 of each mowing element, wherein guide wheels 29' are moreover situated close to the chain wheels 29 in order to increase the engaging angle and thereby the number of links of the chain 30 in contact with the chain wheel. By displacing the guide wheels 29' to the rear relative to the direction of movement P1 space can be obtained at the front of the tooth wheel casing so that the leading edge thereof can likewise be bent to the rear. Thus achieved is a free overlapping range of the mowing members between the adjacent dishes.

The chain 30 can be tensioned by a tensioning wheel 32 provided with a shaft stump 33 which is displaceable in a circular path in the housing-like support bar 7 from the one position shown in full lines in fig. 2a to the other position shown in broken lines.

A gas spring 35 or like tensioning element presses the tensioning wheel 32 in the direction of the arrow P2 and in this manner can therefore take up the change in length of the chain 30.

The rearmost portion of the chain 30 relative to the direction of forward movement P1 can be guided in the housing-like support bar 7 by supporting the latter on a slide plate 42, for instance of plastic such as teflon, which is fixed on the bottom of the tray-like plate 20.

Fig. 2b shows an alternative embodiment of the chain path in the support bar 7. In this figure the same components are designated with the same reference numerals. The engaging angle around the chain wheels 29 is also enlarged by placing guide wheels 29' in suitable manner in an asymmetrical sense as in fig. 2a.

The difference from the embodiment of fig. 2a can be seen in the manner of tensioning the chain, which now takes place by rotatably mounting in a sub-frame two tensioning wheels 32 functioning as guide wheels. The sub-frame 40 is cruciform and is mounted pivotally at 41 in support bar 7. The arm end is connected at 42 to a hydraulic damper 43, while a helical tension spring 44 is arranged therearound. The helical tension spring provides an anti-clockwise turning of the sub-frame 40 about the point 41 so that the tensioning wheels 32 can tension the chain 30 running therebetween, wherein the engaging angle round the adjacently situated chain wheels 29 is simultaneously enlarged.

The rear portion of the chain 30 is guided in a channel 45 extending over a portion of or the entire length of support bar 7.

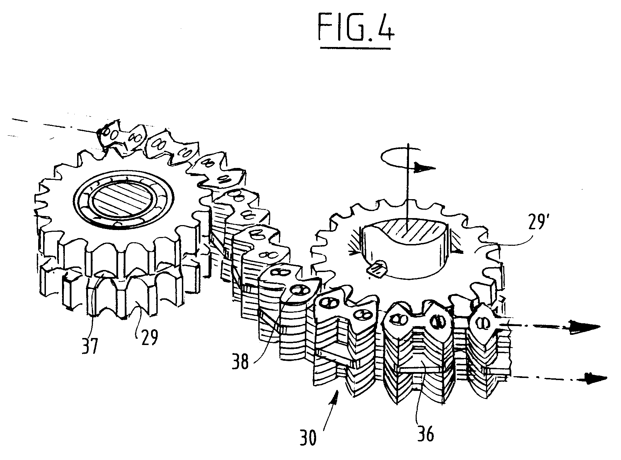

Fig. 4 shows a plate chain 30 whereof the links are each built up of plates located one on another with a configuration such that a tooth shape is formed on either side of the lengthwise direction of the chain. This tooth shape therefore engages in a chain wheel 29 or guide wheel 29' as shown in fig. 4. The tooth shape may be evolvent, which contributes to a low-noise transmission.

It is noted that in the middle of chain 30 is arranged a full plate 36 which protrudes with the outer periphery relative to the flanks of the teeth of the plate chain 30. This protruding plate 36 falls into a peripheral groove 37 of each tooth wheel 29 and 29' respectively, thus ensuring the guiding of chain 30.

It is further noted that the swivel pins 38 which provide the connection between adjoining links of the chain 30 have a maximum length equal to the thickness or height of the chain 30. A slide guiding on the slide plate 52 can in this way be embodied in the housing 7 and the thickness of the support bar 7 can moreover be restricted to a minimum owing to the small construction height of the transmission. A great power can nevertheless be transmitted because the full width of the chain and the chain wheels 29 are used for power transfer.

It is noted finally that the centre lines of the chain wheels 29 lie to the front relative to the central longitudinal plane A-A in fig. 2 when the mower bar is moved forward over the field in the direction of the arrow P1.

With this arrangement a large free mowing area B of each mowing element is ensured on the front side of the bar 7, wherein the overlapping mowing range C of adjacent mowing elements already begins in front of the bar 7. This furthers a correct cutting of the crop and discharge of the crop over the discs 8 to the rear.

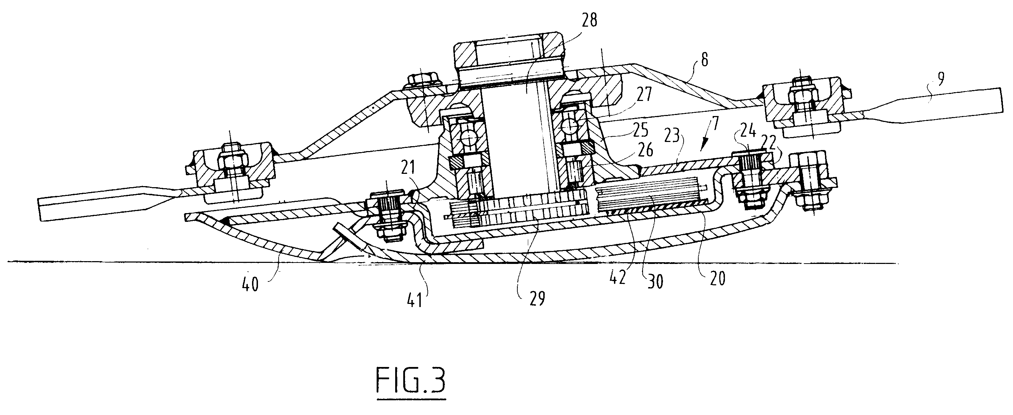

Finally, it is noted that in fig. 3 the support bar 7 is provided at the front with a slide shoe 50 and a slide shoe 51 carried along underneath in order to hold the mower bar at the correct height above the ground.

The invention is not limited to the above described embodiment.

**Claims**

1. Device for mowing crops such as grass, comprising a frame for displacing over the field, a housing-like support bar carried by the frame, extending transversely of the direction of movement and having at least two rotatably driven mowing elements which are distributed over the length of the support bar, and a transmission located in the bar for causing each mowing element to rotate, **characterized in that** the transmission is formed by an endless chain which is trained alternately around the one and then the other side respectively of a chain wheel associated with each mowing element.

2. Device as claimed in claim 1, **characterized in that** a guide wheel is arranged close to each chain wheel in the housing-like support bar.

3. Device as claimed in claim 1 or 2, **characterized in that** the chain wheels (29) are fixed onto the rotational shaft (28) of the mowing element and the centre line of each shaft (28) is situated as seen in the transporting direction P1 in front of the central longitudinal plane A-A of the bar (7).

4. Device as claimed in claim 3, **characterized in that** a guide chain wheel (29') is arranged close to a chain wheel (29) to enlarge the engaging angle.

5. Device as claimed in claim 4, **characterized in that** the guide chain wheel is displaced to the rear relative to the mower bar and this front side has a localized inward bending at each overlap of two adjacent mowing elements rotating towards one another.

6. Device as claimed in any of the foregoing claims, **characterized in that** the or each mowing element is embodied as a dish having cutting blades arranged on the periphery, which dish is situated above the associated chain wheel.

7. Device as claimed in any of the foregoing claims, **characterized in that** one or more tensioning wheels (32) for the chain (30) are arranged displaceably in the housing (7) by means of a spring bias.

8. Device as claimed in any of the foregoing claims, **characterized in that** the chain is a toothed plate chain.

9. Device as claimed in claim 8, **characterized in that** the height of the chain (30) is equal to the thickness of the chain wheel (29).

10. Device as claimed in claim 8 or 9, **characterized in that** the length of the rotating pin (38) arranged between the links of the chain is at the most equal to the thickness of the chain (30).

11. Device as claimed in any of the foregoing claims, **characterized in that** a chain guiding is arranged in the part of the housing behind the rotation shafts.

12. Device as claimed in claim 11, **characterized in that** the chain guiding is embodied as a wear plate of plastic, for instance teflon.

FIG.1

FIG.2a

FIG 2b

EP 0 487 146 A2

FIG.3

EP 0 487 146 A2

# FIG.4

29'

37   29

38

30   36